(19) Europäisches Patentamt
European Patent Office
Office européen des brevets

(11) Numéro de publication: **0 053 956**
**B1**

(12) # FASCICULE DE BREVET EUROPEEN

(45) Date de publication du fascicule du brevet: **05.02.86**

(51) Int. Cl.[4]: **C 08 F 10/02**, C 08 F 4/62, C 08 F 4/64

(21) Numéro de dépôt: **81401733.1**

(22) Date de dépôt: **29.10.81**

(54) **Catalyseur de polymérisation de l'éthylène comprenant un composé aromatique du silicium et son procédé de fabrication.**

(30) Priorité: **02.12.80 FR 8025519**

(43) Date de publication de la demande: **16.06.82 Bulletin 82/24**

(45) Mention de la délivrance du brevet: **05.02.86 Bulletin 86/6**

(84) Etats contractants désignés: **AT BE CH DE FR GB IT LI LU NL SE**

(56) Documents cités:
**EP - A - 0 013 246**
**FR - A - 2 202 897**
**US - A - 3 907 759**

**CHEMICAL ABSTRACTS, vol. 91, no. 24, 10 décembre 1979, page 18, abrégé 193905j, COLUMBUS OHIO (US)**

(73) Titulaire: **Société Chimique des Charbonnages, Tour Aurore Place des Reflets Cédex no 5, F-92080 Paris la Défense 2 (FR)**

(72) Inventeur: **Bujadoux, Karel, 31 Avenue Van Pelt, F-62300 Lens (FR)**
Inventeur: **Neyer, Jean-Marie, 13, rue de Stiring, Etzling F-57460 Behren-lès-Forbach (FR)**

(74) Mandataire: **Dubost, Thierry, SOCIETE CHIMIQUE DES CHARBONNAGES Service Propriété Industrielle B.P. 57, F-62670 Mazingarbe (FR)**

EP 0 053 956 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

La présente invention concerne des catalyseurs de polymérisation de l'ethylene et, plus particulièrement, des catalyseurs de type Ziegler comprenat un composé aromatique du silicium.

De nombreuses variétés de catalyseurs de type Ziegler sont déjà connues pour la polymérisation de l'éthylène et des α-oléfines. Ces catalyseurs comprennent généralement le constituat catalytique proprement dit, consistant en au moins un composé halogéné d'un métal de transition des groupes IV à VI de la Classification Périodique, et un activateur choisi parmi les hydrures et les composés orgaométalliques des métaux des groupes I à III de la Classification Périodique. Le constituant catalyti-sur un support inerte tel que l'alumine, la silice, la magnésie, les halogé-nures de magnésium ou de manganèse, etc...

Le brevet FR-A- 2.392. 044 décrit l'application à la poly-mérisation de l' éthylène, à une température comprise entre 0° et 150°C et sous une pression de 1 à 50 atmosphères, d'un composant catalytique obtenu en traitant $VOCl_3$ successivement par le triphénylsilanol, de manière à former un composé de formule $(\varnothing_3SiO)_n VOCl_{3-n}$ (n est 1, 2 ou 3), puis par un alcoolate d'aluminium. La demande de brevet japonais n° 79/70.385 décrit l'application à la polymérisation du propylène d'un composant catalytique obtenu en traitant le tétrachlorure de titane par du chlorure de butylmagnésium en solution, en présence d'un donneur d'électrons comme le benzoate de méthyle et en présence de 0,033 mole de triphénylsilanol par atome de titane.

D'autre part il est connu de polymériser l'éthylène sous une pression comprise entre 400 et 2500 bars environ et à une température comprise entre 180°C et 300°C environ. Dans le cadre d'un tel procédé on cherche à améliorer d'une part le rendement de production par rapport au catalyseur utilisé et d'autre part la qualité du polymère produit en modifiant notamment les paramètres suivants: masse volumique, masse moléculaire, répartition des masses moléculaires, formation de dimère butène-1. Le but de la présente invention consiste donc à mettre au point des catalyseurs utilisables pour polymériser l'éthylène dans les conditions de haute température et de haute pression définies ci-dessus et capables d'améliorer le rendement et la qualité du polymère produit.

Les catalyseurs de polymérisation de l'éthylène selon l'inven-des groupes IV à VI de la Classification Périodique, ledit métal de transition se trouvant à l'état trivalent dans ledit composé, ainsi qu'éventuellement du chlorure d'aluminium et/ou au moins un halogénure de magnésium, de manganèse ou d'un métal de transition du groupe VIII de la Classification Périodique, et sont caractérisés par la présence, dans un rapport molaire compris entre 0,2 et 2 par rapport au métal de transition des groupes IV à VI, d'au moins un composé aromatique du silicium de formule $\varnothing_n Si(OH)_{4-n}$ dans laquelle $\varnothing$ est un noyau aromatique ou polyaromatique éventuellement substitué ayant de 6 à 15 atomes de carbone, et $1 \leqq n \leqq 3$. Le composé halogéné de métal de transition des groupes IV à VI est par exemple un trihalogénure de titane, vanadium, zirconium, chrome ou molybdène. Les catalyseurs selon l'invention comprennent subsidiairement et facultative-ment du chlorure d'aluminium $AlCl_3$ (par exemple syncristallisé avec le trichlorure de titane sous la forme $TiCl_3$,

$TiCl_3, \frac{1}{3} AlCl_3)$ et/ou un

halogénure de magnésium, manganèse, nickel, fer ou cobalt ou un mélange de tels halogènures. Enfin les catalyseurs selon l'invention comprennent au moins un (éventuellement plusieurs) arylsilanol de formule $\varnothing_n Si(OH)_{4-n}$ dans laquelle $\varnothing$ peut être par exemple un radical phényl ou naphtyl éventuelle-ment substitué, sur un ou plusieurs atomes de carbone du noyau aromatique, par un ou des radicaux hydrocarbonés.

Selon l'invention, le rapport atomique du silicium au métal de transition des groupes IV à VI est compris entre 0,2 et 2 inclusivement.

Le comportement des catalyseurs selon l'invention vis-à-vis de la polymérisation de l' éthylène comprend un aspect important qui les rend spécialement adaptés à un emploi dans des conditions de pression élevée et de température élevée : on a constaté en effet qu'ils permettent dans de telles conditions d'augmenter le rendement de polymère produit tout en augmentant sa masse moléculaire moyenne en nombre, et tout en diminuant la formation du dimère butène-1 ainsi que le taux de masses moléculaires inférieures à 5.000.

Les catalyseurs selon l'invention peuvent être fabriqués selon au moins deux méthodes différentes, car le composé de formule $\varnothing_n Si(OH)_{4-n}$ peut être mis en contact avec le composé halogéné de métal de transition-et le cas échéant le support inerte - soit à sec soit en suspension dans un solvant. Un premier procédé de fabrication des catalyseurs selon l'invention consiste donc à soumettre le composé halogéné de métal de transition, le composé de formule $\varnothing_n Si(OH)_{4-n}$ et le cas échéant le support inerte à une étape de broyage en commun dans laquelle l'énergie de broyage serait comprise entre 1,5 et 25 KWh par Kg de matière solide traitée. Un second procédé de fabrication des catalyseurs selon l'invention consiste à mettre le composé halogéné de métal de transition, le cas echéant préalablement broyé en commun avec un support inerte, en suspension dans un solvant hydrocarboné aliphatique, cycloaliphatique ou aromatique, puis à ajouter à la suspension le

composé de formule $\varnothing_n Si(OH)_{4-n}$ dans la quantité voulue par rapport au métal de transition. Selon ce second procédé, la mise en contact du composé de silicium peut s'effectuer à chaud en portant la température du milieu solvant à une température légèrement inférieure à son point d' ébullition.

La présente invention se rapporte aussi à un procédé de poly-mérisation de l'éthylène, sous une pression comprise entre 200 et 2500 bars et à une température comprise entre 170° et 300° C, en présence d'un système catalytique comprenant (a) au moins un composé halogéné d'un métal de transition des groupes IV à VI de la Classification Périodique, ledit ainsi qu'éventuellement du chlorure d'aluminium et/ou au moins un halogénure de magnésium, de manganèse et d'un métal de transition du groupe VIII de la Classification Périodique, (b) au moins un activateur choisi parmi les hydrures et les composés organométalliques des métaux des groupes I à III de la Classification Périodique, le rapport atomique du métal de l'acti-vateur au métal de transition des groupes IV à VI étant compris entre 0,1 et 10, et (c) au moins un composé aromatique du silicium de formule $\varnothing_n Si(OH)_{4-n}$ dans laquelle $\varnothing$ est un noyau aromatique ou polyaromatique éventuellement substitué ayant de 6 à 1 5 atomes de carbone, et $1 \leqq n \leqq 3$ le rapport atomique du silicium au métal de transition des groupes IV à VI étant compris entre 0,2 et 2 inclusivement, et le temps de séjour moyen du système catalytique dans le réacteur de polymérisation étant compris entre 2 et 100 secondes. Ce temps de séjour est choisi en fonction de la température dans le réacteur en ce sens qu'il est d'autant plus élevé que la température est plus basse. Ce procédé peut mettre en jeu, notamment lorsque la température et/ou la pression de polymérisation ne sont pas très é1evées, la présence d'un hydrocarbure inerte ayant de préférence moins de 5 atomes de carbone tel que par exemple propane ou butane.

Lorsque dans le procédé haute pression on utilise un réacteur autoclave ou tubulaire ayant plusieurs zones réactionnelles, il pourra être avantageux, en vue de produire certaines qualités de polymères, d'adopter une disposition particulière de l'installation de polymérisation comme par exemple l'une de celles décrites dans les FR-A-n° 2.346.374 et 2.385.745. Souvent il sera utile pour contrôler l'indice de fluidité du polymère, notamment du polyéthylène, d'effectuer la poly-mérisation en présence d'un agent de transfert de chaîne comme l'hydro-gene. Dans le procédé haute pression, cet agent sera utilisé à raison de 0, 04 à 2 % en volume par rapport à l' éthylène. Dans d'autre cas notamment lorsqu'on veut fabriquer un polymère d'éthylène ayant un indice de fluidité compris entre 0,1 et 2 et un indice de polydispersité supérieur à 10, il sera utile d'effectuer la polymérisation en l'absence totale d'hydrogène et en adoptant une disposition particulière de l'installation comme par exemple celle décrite dans la demande de brevet européen EP-A- 0 013 246.

Le procédé selon l'invention permet, en ce qui concerne la polymérisation ou la copolymérisation de l'éthylène, de produire toute une gamme de polymères dont la masse volumique est comprise entre 0,905 et 0,960 g/cm3 et dont l'indice de fluidité est compris entre 0,1 et 1 00 dg/mn environ. Les polymères de masse volumique relativement basse, par exemple comprise entre 0,905 et 0,935 g/cm3, sont obtenus en copo-lymérisant l'éthylène avec une α-oléfine ayant de 3 à 8 atomes de carbone, par exemple le propène à raison de 15 à 35% en poids ou bien le butène-1 à raison de 15 à 60 % en poids. Les polymères de masse volumique intermédiaire, par exemple comprise entre 0,935 et 0,945 g/cm3, sont obtenus en copolymérisant l' éthylène avec une α-oléfine ayant de 3 à 8 atomes de carbone, par exemple le propène à raison de 5 à 15% en poids, ou bien le butène-1 à raison de 8 à 20% en poids.

Le procédé selon l'invention permet d'améliorer d'une part le rendement de production par rapport au catalyseur utilisé et d'autre part la qualité du polymère produit. D' autres avantages de l'invention appa-raîtront à la lecture des exemples suivants donnés à titre illustratif et non limitatif.

**EXEMPLES 1 (comparatif), 2 et 3**

Dans un broyeur discontinu à billes, on introduit d'une part du trichlorure de titane syncristallisé avec du chlorure d'aluminium

$$TiCl_3, \frac{1}{3} AlCl_3,$$

d'autre part du chlorure de magnésium anhydre dans un rapport atomique Mg/Ti égal à 2. Dans les exemples 2 et 3, le produit ainsi obtenu est mis en suspension dans le xylène avec un composé aroma-tique de silicium selon l'invention dans un rapport atomique Si/Ti égal à 1, pendant une durée de 1 7 heures et à température ambiante. En utili-sant respectivement le triphénylsilanol (exemple 2), et le diphénylsilane-diol (exemple 3), on prépare les catalyseurs suivants (dans les formules, $\varnothing$ désigne le radical phényle) :

. $(TiCl_3)(AlCl_3)_{0,33}/(MgCl_2)_2(\varnothing_3 SiOH)$ pour l'exemple 2.

. $(TiCl_3)(AlCl_3)_{0,33}(MgCl_2)_2(\varnothing_2 Si(OH_2)$ pour l'example 3.

Le catalyseur obtenu est dispersé dans du méthylcyclohexane puis activé par du trioctylaluminium (activateur A) en quantité telle que le rapport atomique Al/Ti soit égal à 6. On effectue alors la polymérisation de l'éthylène en

continu, en présence de 1 % d'hydrogène en volume, sous pression de 600 bars dans un réacteur autoclave de volume 0,6 1 maintenu à la température de 245° C en injectant la dispersion de catalyseur ainsi préparée de telle sorte que le temps de séjour moyen du catalyseur dans le réacteur soit égal à 25 secondes environ. Le tableau 1 ci-après indique le rendement catalytique $R_c$ exprimé en kilogrammes de polyéthylène par milliatome de titane, la masse moléculaire moyenne en nombre $M_n$ et le taux B de masses moléculaires inférieures à 5. 000 (exprimé en pourcentage) déterminés par chromatographie de perméation de gel, ainsi que la vitesse de dimérisation exprimée par le taux horaire de formation de butène-1.

**EXEMPLES 4 (comparatif) et 5**

Dans les mêmes conditions de préparation qu'aux exemples prece-dents, on prépare (exemple 5) le catalyseur de formule :
$(TiCl_3)$ $(AlCl_3)_{0,33}$ $(\varnothing_3$ $SiOH)_{0,33}$.
Dans l'essai comparatif (exemple 4), le catalyseur utilisé est $(TiCl_3)$ $(AlCl_3)_{0,33}$. Ces catalyseurs sont activés et utilisés pour la polymérisation de l' éthylène dans les mèmes conditions qu' aux exemples precédents, à l'exception de la température qui est maintenue à 238° C. Le tableau 1 indique le rendement de la polymérisation et les caractéristiques du polymère.

**EXEMPLES 6 (comparatif) et 7**

Dans un broyeur discontinu à billes, on introduit d'une part le composé $TiCl_3$,

FIG/10

$AlCl_3$, d'autre part du chlorure de magnésium anhydre dans un rapport atomique Mg/Ti égal à 6, et enfin (pour l'exemple 7 seule-ment) du triphénylsilanol dans un rapport atomique Si/Ti égal à 0,5. Pendant cette étape de préparation, on fournit une énergie de broyage égale à 3,5 KWh par kg de matière solide traitée.

Les catalyseurs ainsi obtenus sont activés par le diméthyl-éthyl-diéthylsiloxyalane (activateur B) en quantité telle que le rapport atomique Al/Ti soit égal à 6. On effectue la polymérisation de l'éthylène dans les mêmes conditions qu' aux exemples précédents, à l'exception de la température qui est maintenue à 260° C. Les résultats sont consignés dans le tableau I, à l'exception de la vitesse de dimérisation qui n'a pas été mesurée.

**EXEMPLES 8 (comparatif) et 9**

On polymérise l'éthylène en continu sous une pression de 1200 bars dans un réacteur autoclave cylindrique de volume 3 litres divisé, au moyen d' écrans, en trois zones identiques maintenues respecti-vement à des températures de 210° C, 185° C et 260° C. La polymérisation est effectuée en présence de 0,06% en volume d'hydrogène afin d'atteindre dans les deux exemples un polymère d'indice de fluidité (mesuré selon la norme ASTM D-1238 et exprimé en dg/nn) égal à 0,35. Les catalyseurs utilisés, activés par l'activateur E, sont respectivement ceux des exemples 6 (comparatif) et 7. Les résultats sont consignés dans le tableau 1 (la vitesse de dimérisation n'a pas été mesurée) et il est important de noter l'augmentation de la masse volumique du polymère apportée par le catalyseur selon l'invention : 0,958 g/cm3 pour l'exemple contre 0,956 g/cm3 pour l'exemple 8.

**EXEMPLES 10 (comparatif) et 11**

On polymérise l'éthylène dans le même réacteur et sous la même pression qu'aux exemples 8 et 9. Les trois zones sont maintenues respecti-vement à des températures de 220°, 240° et 260° C. La polymérisation est effectuée en présence de 0,5 % en volume d'hydrogène. Les catalyseurs utilisés, activés par l'activateur B, sont respectivement celui de l'exemple 1 (comparatif) et un composé de formule $(TiCl_3)$ $(AlCl_3)_{0,33}$ $(MgCl_2)_2$ $(\varnothing_3$ $SiOH)_{0,33}$, préparés dans les conditions de l'exemple 7.

Les résultats sont consignés dans le tableau 1 ci-après et il est important de noter l'influence du catalyseur selon l'invention d'une part sur la masse volumique ρ et d'autre part sur l'indice de fluidité IF du polymère formé.

Exemple 10: $\rho = 0,950$ g/cm3
IF = 0,75
Exemple 11 : $\rho = 0,953$ g/cm3
IF = 0,4

**TABLEAU 1**

| Exemple | $R_c$ | $M_n$ | B % | Butène-1 % poids/h |
|---|---|---|---|---|
| 1 | 6,0 | 12.000 | 5,7 | 0,49 |
| 2 | 6,9 | 19.000 | 4,3 | 0,05 |
| 3 | 7,2 | 13.000 | 5,6 | 0,32 |

**TABLEAU I** (Suite)

| Exemple | $R_c$ | $M_n$ | B % | Butène-1 % poids/h |
|---|---|---|---|---|
| 4 | 2,6 | 11.500 | 7,5 | 0,57 |
| 5 | 3,7 | 13.000 | 5,9 | 0,22 |
| 6 | 9,4 | 18.500 | 4,0 | -- |
| 7 | 14,0 | 21.000 | 3,3 | -- |
| 8 | 9,6 | 38.500 | 1,3 | -- |
| 9 | 11,7 | 42.000 | 1,0 | -- |
| 10 | 5,0 | 24.000 | 3,8 | 2,0 |
| 11 | 7,7 | 27.000 | 3,4 | 0,9 |

## Revendications

1. Catalyseur de polymérisation de l'éthylène comprenant au moins un composé halogéné d'un métal de transition des groupes IV à VI de la Classification Périodique, ledit métal de transition se trouvant à l'état trivalent dans ledit composé, caractérisé en ce qu'il comprend en outre, dans un rapport molaire compris entre 0,2 et 2 inclusivement par rapport audit métal de transition, au moins un composé aromatique du silicium de formule $\varnothing_n\ Si(OH)_{4-n}$ dans laquelle $\varnothing$ est un noyau aromatique ou polyaroma-tique éventuellement substitué ayant de 6 à 15 atomes de carbone et $1 \leqq n \leqq 3$.

2. Catalyseur selon la revendication 1, caractérisé en ce que le métal de transition est choisi parmi titane, vanadium, zirconium, chrome, molybdène.

3. Catalyseur selon l'une des revendications 1 et 2, caractérisé en ce qu'il comprend en outre du chlorure d'aluminium.

4. Catalyseur selon l'une des revendications 1 à 3, caractérisé en ce qu'il comprend en outre au moins un halogénure de magnésium, de manganèse ou d'un métal de transition du groupe VIII de la Classification Périodique.

5. Catalyseur selon l'une des revendications 1 à 4, caractérisé en ce que $\varnothing$ est un radical phényle.

6. Catalyseur selon la revendication 5, caractérisé en ce que le composé aromatique du silicium est le triphénylsilanol.

7. Catalyseur selon la revendication 5, caractérisé en ce que le composé aromatique du silicium est le diphenylsilanediol.

8. Procédé de fabrication d'un catalyseur selon l'une des revendications 1, 3 et 4, caractérisé en ce qu'on soumet le composé halo-gené de métal de transition, le composé aromatique du silicium et le cas échéant le chlorure d'aluminium et le support inerte à une étape de broyage commun dans laquelle l' énergie de broyage est comprise entre 1,5 et 25 KWh par kg de matière solide traitée.

9. Procédé de fabrication d'un catalyseur selon l'une des reven-dications 1, 3 et 4, caractérisé en ce qu' il consiste à mettre le composé halogéné de métal de transition, le cas échéant préalablement broyé en commun avec un support inerte, en suspension dans un solvant hydrocarboné aliphatique, cycloaliphatique ou aromatique, puis à ajouter à la suspension le composé aromatique du silicium dans la quantité voulue par rapport au métal de transition.

10. Système catalytique pour la polymérisation de l'éthylène comprenant

(a) au moins un catalyseur comprenant au moins un composé halogéné d'un métal de transition des groupes IV à VI de la Classification Périodi-que, et

(b) au moins un activateur choisi parmi les hydrures et les composés organométalliques des métaux des groupes 1 à III de la Classification Périodique, le rapport atomique du métal de l'activateur au métal de transition des groupes IV à VI étant compris entre 0,1 et 10,

caractérisé en ce que le catalyseur (a) est un catalyseur selon l'une des revendications 1 à 7.

11. Procédé de polymérisation de l'éthylène en présence d'un système catalytique, sous une pression comprise entre 200 et 2500 bars et à une température comprise entre 170° et 300°C, le temps de séjour moyen et 100 secondes, caractérisé en ce que le système catalytique est un système selon la revendication 10.

## Patentansprüche:

1. Katalysator zur Polymerisation von Äthylen, der mindestens eine Halogenverbindung eines Übergangsmetalls der Gruppen IV bis VI des Periodensystems enthält, wobei sich das Übergangsmetall in der genann-ten Verbindung im dreiwertigen Zustand befindet, dadurch gekennzeich-net, daß er weiters in einem Molverhältnis im Bereich von 0,2 bis 2 in bezug auf das genannte Übergangsmetall mindestens eine aromatische Siliziumverbindung der Formel $\varnothing_n Si(OH)_{4-n}$ enthält, in der $\varnothing$ ein ge-gebenenfalls substituierter Aromat- oder Polyaromatkern mit 6 bis 15 Kohlenstoffatomen ist und $\leqq 1\ n \leqq 3$.

2. Katalysator nach Anspruch 1, dadurch gekennzeichnet, daß das Über-gangsmetall ausgewählt ist aus der Gruppe bestehend aus Titan, Vana-dium, Zirkon, Chrom und Molybdän.

3. Katalysator nach Anspruch 1 oder 2, dadurch gekennzeichnet, daß er weiters Aluminiumchlorid enthält.

4. Katalysator nach einem der Ansprüche 1 bis 3, dadurch gekennzeich net, daß er weiters mindestens ein Halogenid des Magnesiums, Mangans oder eines Übergangsmetalls der Gruppe VIII des Periodensystems ent-hält.

5. Katalysator nach einem der Ansprüche 1 bis 4, dadurch gekennzeich-net, daß ∅ ein Phenylradikal ist.

6. Katalysator nach Anspruch 5, dadurch gekennzeichnet, daß die aro-matische Siliziumverbindung Triphenylsilanol ist.

7. Katalysator nach Anspruch 5, dadurch gekennzeichnet, daß die aro-matische Siliziumverbindung Diphenylsilandiol ist.

8. Verfahren zur Herstellung eines Katalysators nach den Ansprüchen 1,3 und 4, dadurch gekennzeichnet, daß man die Halogenverbindung des Übergangsmetalls, die aromatische Siliziumverbindung und gegebenen-falls das Aluminiumchlorid und den inerten Träger einem gemeinsamen Mahlvorgang unterwirft, bei dem die Mahlenergie zwischen 1,5 und 25 KWh/kg behandelten Feststoff beträgt.

9. Verfahren zur Herstellung eines Katalysators nach einem der Ansprü-che 1,3 und 4, dadurch gekennzeichnet, daß es darin besteht, daß die Halogenverbindung des Übergangsmetalls, gegebenenfalls vorher zusammen mit einem inerten Träger gemahlen, in einem aliphatischen, cycloalipha-tischen oder aromatischen Kohlenwasserstoff-Lösungsmittel suspendiert wird und danach der Suspension die aromatische Siliziumverbindung in der gewünschten Menge in bezug auf das Übergangsmetall zugesetzt wird.

10. Katalysatorsystem für die Polymerisation von Äthylen, bestehend aus

(a) mindestens einem Katalysator, der zumindest eine Halogenverbindung eines Übergangsmetalls der Gruppen IV bis VI des Periodensystems enthält, und

(b) mindestens einem Aktivator ausgewählt aus der Gruppe bestehend aus den Hydriden und den organometallischen Verbindungen von Metallen der Gruppen 1 bis III des Periodensystems, wobei das Atomverhältnis des Metalls des Aktivators zum Übergangsmetall der Gruppen IV bis VI zwischen 0,1 und 10 beträgt, dadurch gekennzeichnet, daß der Katalysator (a) ein Katalysator nach einem der Ansprüche 1 bis 7 ist.

11. Verfahren zur Polymerisation von Äthylen in Gegenwart eines Katalysatorsystems, unter einem Druck zwischen 200 und 2500 bar und bei einer Temperatur zwischen 170° und 300°C, wobei die durch-schnittliche Verweilzeit des genannten Systems in dem Polymeri-sationsreaktor zwischen 2 und 100 Sekunden beträgt, dadurch gekennzeichnet, daß das Katalysatorsystem ein System nach Anspruch 10 ist.

**Claims**

1. Catalyst for the polymerisation of ethylene, comprising at least one halogenated compound of a transition metal of Groups IV to VI of the Periodic System, said metal being in the trivalent state in said compound, characterised in that it further comprises, in a molar ratio of between 0.2 and 2 inclusively related to said transition metal, at least one aromatic silicon compound, having the formula $\varnothing_n$Si(OH)4-n, in which ∅ is an aromatic or polyaromatic ring, optionally substituted and having from 6 to 15 carbon atoms, and $1 \leqq n \leqq 3$.

2. Catalyst according to Claim 1, characterised in that the transition metal is selected from titanium, vanadium, zirconium, chromium and molybdenum.

3. Catalyst according to one of the claims 1 and 2, characterised in that it further comprises aluminium chloride.

4. Catalyst according to one of the claims 1 to 3, characterised in that it further comprises at least one halide of magnesium, manganese or of a transition metal of Group VIII of the Periodic System.

5. Catalyst according to one of the claims 1 to 4, characterised in that ∅ is a phenyl radical.

6. Catalyst according to Claim 5, characterised in that the aromatic silicon compound is triphenyl silanol.

7. Catalyst according to Claim 5, characterised in that the aromatic silicon compound is diphenylsilane diol.

8. Process for the manufacture of a catalyst according to any of claims 1, 3 and 4, characterised in that the halogenated transition metal compounds, the aromatic silicon compound and, where it applies, the aluminium chloride and the inert support are submitted to a joint milling step, in which the milling energy lies between 1.5 and 25 kWh per kg of solid materiel treated.

9. Process for the manufacture of a catalyst according to one of the claims 1,3 and 4, characterised in that it consists in suspending the halogenated transition metal compound, previously milled together with an inert support, if desired, in an aliphatic, cycloaliphatic or aromatic hydrocarbon solvent and then adding the aromatic silicon compound to the suspension in the quantity desired, in relation to the transition metal.

10. Catalyst system for the polymerisation of ethylene, comprising

(a) at least one catalyst, comprising at least one halogenated compound of transition metal of Groups IV to VI of the Periodic System, and

(b) at least one activator, selected from hydrides and organometallic compounds of metals of Groups 1 to III of the Periodic System, the atomatic ratio of the metal of the activator to the transition metal of Groups IV to VI lying between 0.1 and 10,

characterised in that the catalyst (a) is a catalyst according to any of claims 1 to 7.

11. Process for the polymerisation of ethylene in the presence of a catalyst system, under a pressure of between 20D and 2500 bar and at a temperature of between 170° and 300°C, the average residence time of said system in the polymerisation reactor lying between 2 and 100 seconds, characterised in that the catalyst system is a system according to Claim 10.